# EUROPEAN PATENT APPLICATION

(11) **EP 1 295 751 A2**
(43) Date of publication of application: **26.03.2003**
(21) Application number: 02380192.1
(22) Date of filing: 12.09.2002
(51) Int. Cl.: B60L 8/00

(54) **Vehicle, which for its motion and application, uses photovoltaics solar power generator**

(30) Priority: 25.09.2001 ES 200102361 U
(71) Applicant: Correa Moreu, Fernando, 29016 Malaga (ES)
(72) Inventor: Correa Moreu, Fernando, 29016 Malaga (ES)

(57) **Abstract**

One device, or auto-transport vehicle with a substances freezer-cooler(4) "built in" system which for their conservation they need drops temperatures and they could be needing displaced for their distribution. Walking driven(17)(14)(9) by one person at slow speed, 10 km/h maximum. That so much for itself motion(5) as for the freezing or cooling uses one energy production system(1)(7)(13) based on one photovoltaic solar power generator P.V. (Photovoltaic energy)(1).

It has been conceived and foreseen to enable and to facilitate its access to any zone even difficult zones, and do not carry on shoulders heavy coolers(3). As well as to facilitate cooled and/or frozen substances deliverying.

For substances frozen and/or cooled transportation and delivering, which the mechanism for freezing-cooling are the same.Are known some similars elements and devices to the proposed, which carry out its targets successfuly, in one or another way, but the differences with this device are: the power generation system is totaly, one solar energy converter or photovoltaic solar power generator.

## Description

### Invention Technical Field

The invention consist in one device, or auto-transport vehicle with a substances freezer-cooler "built in" system which for their conservation they need drops temperatures and they could be needing displaced for their distribution. That so much for itself motion as for the freezing or cooling uses one energy production system based on one photovoltaic solar power generator P.V. **(Photovoltaic energy)**.

It has been conceived and foreseen to enable and to facilitate its access to any zone even difficult zones, and do not carry on shoulders heavy coolers. As well as to facilitate cooled and/or frozen substances deliverying.

### Technical Sector Quotations

This invention belongs to technical sector of substances frozen and/or cooled transportation and delivering, which the mechanism for freezing-cooling are the same.Are known some similars elements and devices to the proposed, which carry out its targets successfuly, in one or another way, but the differences with this device are: the power generation system is totaly, one solar energy converter or photovoltaic solar power generator.

According to I observe, until the moment of this patent application, I know, in one national and international searching suggested to the Oficina Española de Patentes y Marcas (O.E.P.M.), the statement of technological, and exist similars devices in this sense, like carterpillars (U9000450) that are powered by Gas-Oil which the main inconvenience is weight, and its depence on the fuel delivering but for some services uses photovoltaic energy. I find (Esp@cenet) similars devices in tricycles, human powered,(DE29910848 U1), (DE 29917866 U1), (DE 29923525 U1) and they lack facility for moving in sandy terrains, or terrains with some difficulty. I find similars devices with seems features in tows (U9100605), (P8801615), (P9000450) but they carry on depending for its motion, fossils fuels delivering.

We don't find neither in europe nor in the world, devices of eqqual features, powered at same time with photovoltaic solar energy for movement, services and cooling-freezing.

### The invention Explanation and description (The technical problem and its resolution)

One vehicle, power supplied by solar electrical energy, walking driven by one person at slow speed, 10 km/h maximum for cooled or frozen substances deliverying. To obtain the objective for it has been invented, (to maintain substances frozen or cooled and their transportation for any ground), it possesses two electrically and mechanicaly independents portions (systems), perfectly related and integrated inside it, they are:
.- **Electrical Freezing - Cooling System**. which will give it, the possibility for maintain freezer-cooled the substances.
.- **Electrical tracción gearmotor and manoeuvrer System,** which will give it the possibility for motioning, on all grounds, thus same, will be able to exceed diverse slopes.

### Technical problem that ourselves expose:

"To deliver frozen or cooled substances, one distributor needs, of a freezing-cooling system and motion system that were independent of flammable or heavy supplies of polluting elements, with a high noise level and that it do not need for using and moving the device his human strength".

This problem, ourselves resolve in the following way:

In 1999 we Invented a three wheels small vehicle, device with which, the distributor will not have load with heavy freezers elements for his delivering work, since its power system for its moving, permit to be moved for any ground and terrains, without depending on flammable supplies or fuel deliveries, as well as resolved for users comfort the fact, of carrying to them the product to consume.

This system consists, that mounts tyres of wide and drop density balloon, for motion traction system and a single crazy - tyre, of smaller diameter and balloon for the driving and manoeuvring system that will be performed walking and manually. Its two electricals systems so much the freezer mechanism as the motion power mechanism, not contaminate further the environment, advantage upon previous devices due to that the supply of energy integrally is provided for each converters of the solar energy or solar radiation collecting modules (P.V. energy) providing all the autonomy and necessary energy.

### Invention advantages

Functionals Features: Based on the ancestral concept of "car - trolley of ice creams" moved by animal energy, I have modified practically all the characteristics, doing of it, an versatil element that will provide a deliverying with all its guarantees. that cooled substances by zones of difficult access as well as in general by any place.
1.- The main advantage that posses the invention is, that the energy that utilizes so much for its movement, and make work the freezer system and services are produced for solar radiation collecting modules or solar electrical power supply (Photovoltaic energy), which supply, sufficient electric energy for both services, and they will be placed like a stiff roof.
2.- This ingenuity is a machine car, and a frozen-cooler with very simple mechanisms saving the complexity of the control systems, with high efficiency electronic mechanisms.
3.- The vehicle is capable for moving walking, moved and driven by one person (worker), which will walk with sufficient slowness as to not produce abuses and the products that contain for delivering were sufficiently effective. This speed will not exceed, 10 kms/h, nevertheless is susceptible of to be enlarged through the speed control system.
4.- A crazy-tyre, will be the responsible for manoeuvring, the vehicle, facilitating the driving by any surface, although this were sandy.
5.- All the building material is based on drop density high efficiency elements, such as glass fiber and aluminum except for those elements that by their characteristics must to be something heavier.
6.- The assembly, controller - system compresor and freezer are based on a high efficiency mechanism, only it's required that the freezer gas have no CFC, for maintaining the not contamination soul(spirit). This system assures in a rank among -30 and 5 centigrade degrees (CELSIUS) the icebox temperature for guarantee the perfect products freezing or cooling to offering for its distribution.
7.- Traction and Motion power characteristic:
   This system is composed of an D.C. electric gearmotor with sufficient power to move all the apparatus forward and toward behind, through a gearing and reductor system of revolutions that multiply the power. It will act upon main tyres of wide balloon.

### Drawing brief description

For complementing the description following I will realice and with the objetive for helping the best comprehension of the invention features, Added to this description memo , I accompany some drawings.

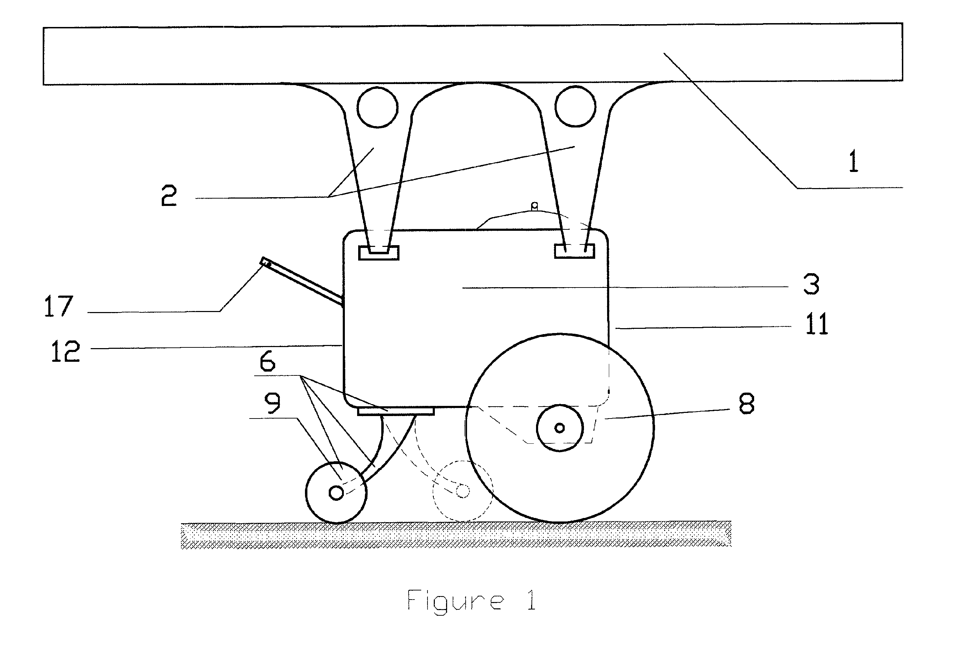

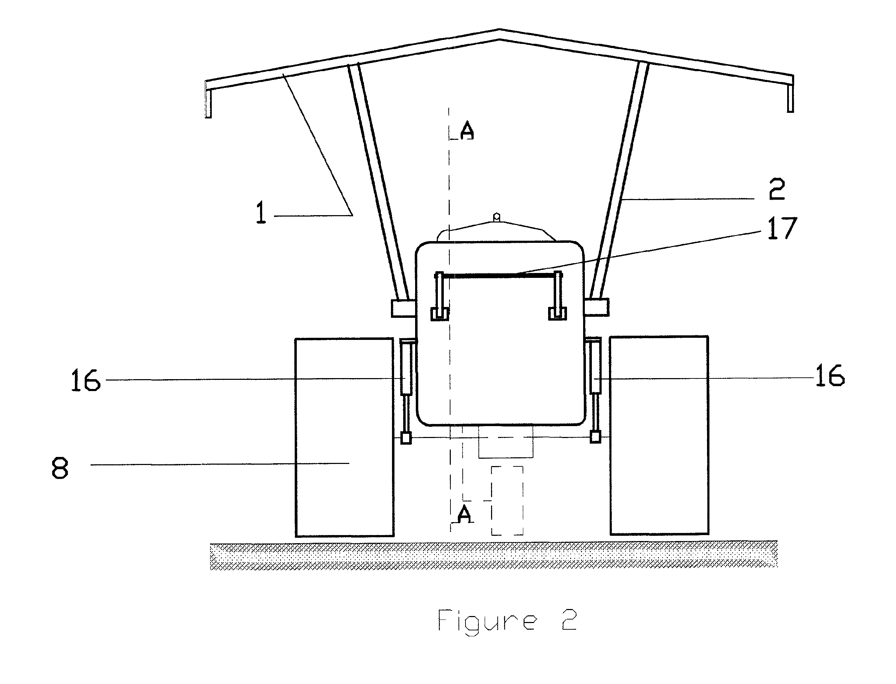

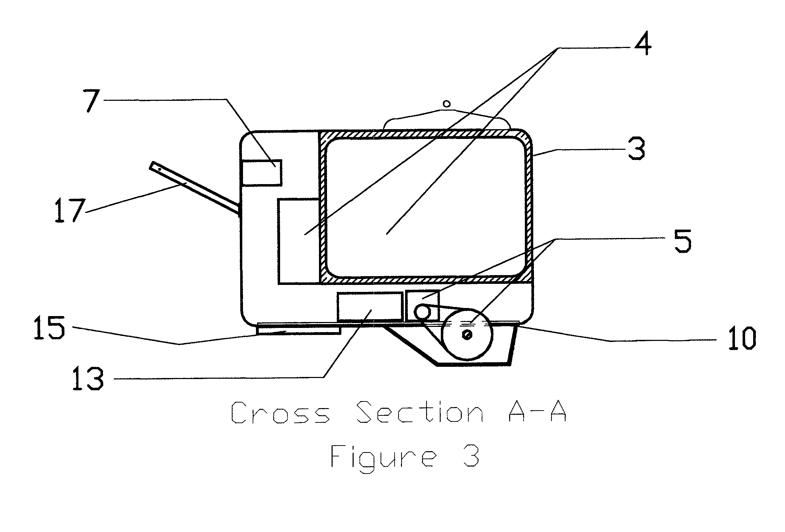

I present some draws, detailed in a half were seems three figures and views, which are (Figure 1) side view, this figure show the rigid awning way, also the side view of tyres they will have more or less diameter, depending on last calculation. The driving system, which will be operated with one handle bar (17) and one crazy wheel(9) which will allow the driving. (Figure 2) Elevation view this view show clearly the wheels tyres, one section made to the vat where shows in this figure 2, and which is declared in Figure 3,where shows the best adecuated disposition of all the elements, electronicals control, motion, and freezing.
(1) Poligonal Rigid awning (Manufactured with solar P.V. Modules)
(2) Awning frame system
(3) Vat or Icebox--Which is equipped by:
   (4) Freezer system
   (5) Traction and Motion system
   (6) Maneuvrer system
   (7) Electronic controls system
(8) Wheel tyres all terrains system
(9) Crazy wheel
(10) Supporting deck
(11) Front
(12) Back
(13) Solar rechargeable electric cells (Batteries)
(14) Driving wheel arm
(15) Ball bearings
(16) Shocks absorbers (Cushionings)
(17) Manoeuvring handle bar

### Realization way making reference to drawins

The invention would be realized in follow way:

**Photovoltaic Solar modules(1),** designed with suficiency powering for guarantee the device effectivity, joint to frame system(2) which will be made in anodized alluminum and will be joint at same time to Support deck(10) or auto-transport chassis which also it will be made in anodized alluminum. This platform willl support fisicaly the modules, the Vat or Icebox and its elements so the motion system(5).

**The VAT or Icebox**(3) will be equiped by covers, solid skirts,and will be equiped in glass fiber and polyester, they will be assembled in the best way for inspecting and repairing, so will protect all of the elements which were installed inside, controls, motor, bateries, freezer and so on...

**The wide balloon Wheels tyres (8)** they characterize to the invention, are made with synthetics rubber materials it is adequated for moving the device for all terrains or "the resolved problem grounds" they must be equiped in wide balloon and special sole, for moving in any terrain specialy the sanded.

**The Manoeuvring and driving system(9)** it will be made in stainless steel, so the wheels drive system. The driving wheel arm(14) will be made in anodized alluminum, so the handle bar(17) for manoeuvring ,Coupling of driving arm(14) to the support deck(10) will be attached with one screwing assembly and ball bearing system(15).

**The electricals rechargeables bateries system(13)** One rechargeable control system, will ever maintenance the cool over the worker surveying, all vehicle assemble will be driven easily because onto the manoeuvring handle(17) ergonomicaly and with easy reading will be installed one controls module for controlling the invention functioning.

**The Motion system** It's compound by electric D.C. gearmotor with high torque, this gearing the maximum power for surpassing those obstacles and surpassing the high friction that suppose the wheels movement.

Two invention electrical systems, are independents, one of them is equiped by one modules portion which provide energy (power) to control systems, freezer and cooler, and services, the other portion will provide power to motion system, and its control electronicals elements.

The two electrical systems of appliance machine, are independents, one of them is equipped by one module portion which supply energy to control systems, freezer and services the other one protion, power supply to traction-motion system and control electronical elements

## Claims

**1.** That, it belongs to walking drive type and three wheels, using for driving and to go round one fastened handle(17) which move, using manoeuvring, while the machine is in motion the driving zone to left or right. **Characterized by** on the whole all powers supplies for its motion and utilization, are solar energy collecting modules (Photovoltaics modules) by means two electrical independents circuits, and it is for all terrains. The system is worked for its motion by one electrical traccion gearmotor which operate transmitting its movement to the wide balloon tyres(8) and one substances freezer-cooler system(4) by means of one compressor, electricaly feeded by solar energy. Helped by freezers control mechanisms and battery charging controls, radio communications, vehicle driving controls, target of this appliance machine.

**2.** Vehicle which for its motion and application use photovoltaic solar power generator(1) according to claim before, **characterized by**, one surface portion of them(1) or independent first circuit, like a rigid and poligonal sunshade, supply electrical energy for all electronicals elements(7) and batteries charging(13) freezer-cooler compressor mechanism(4).

**3.** Vehicle which for its motion and application use photovoltaic solar power generator according to before claims, **characterized by** the control electronicals elements(7) drive the batteries charge status so as the cooler-freezer status.

**4.** Vehicle which for its motion and application use photovoltaic solar power generator according to first claim, **characterized by** it carry installed mobile comunications system.

**5.** Vehicle which for its motion and application use photovoltaic solar power generator according to first claim, **characterized by** it carry installed one sound system and speakers.

**6.** Vehicle which for its motion and application use photovoltaic solar power generator according to first claim, **characterized by** it carry installed one lighting system.

**7.** Vehicle which for its motion and application use photovoltaic solar power generator according to first claim **characterized by** the other surface portion of photovoltaic solar power generator(1) or second independent circuit, supply energy to traction gearmotor(5) fastened with one silent-block system to supporting deck(10).

**9.** Vehicle which for its motion and application use photovoltaic solar power generator according to before claim ,**characterized by** the traction gear motor is installed fastened with one silent-block system to the supporting deck(10).

**10.** Vehicle which for its motion and application use photovoltaic solar power generator according to before claim, **characterized by** the bar drive (Transmission) to wheels is by one stem, bar drive or chain drive, which transmit the traction movement coming from gear box(5) and connected to wheel hub with wide balloon(8).

**11.** Vehicle which for its motion and application use photovoltaic solar power generator according to before claims **characterized by** carry installed one shock absorber or cushioning system(16).

**12.** Vehicle which for its motion and application use photovoltaic solar power generator according to before claims ,**characterized by** the brake system is carry out by brake disks, mounted on the hub.

**13.** Vehicle which for its motion and application use photovoltaic solar power generator according to before claims, **characterized by** one crazy-wheel (9) installed and connected to the supporting deck(10) by one arm and balls bearings(15).

**14.** Vehicle which for its motion and application use photovoltaicvoltaics solar power generator according to first claim, **characterized by** destined for control its driving and manoeuvring, has one tachometer, thermometer, press indicator, switches for servizing, voltmeter, ampmeter, battery charging state, brake handle and acelerator handle.
